# EUROPÄISCHE PATENTANMELDUNG

(11) **EP 1 772 178 A1**
(43) Veröffentlichungstag der Anmeldung: **11.04.2007**
(21) Anmeldenummer: 06020149.8
(22) Anmeldetag: 13.07.2001
(51) Int. Cl.: B01D 39/20, B01D 46/24, F01N 3/021, B01D 53/94

(54) **Filterkerze**

(30) Priorität: 13.07.2000 DE 10034045
(62) Teilanmeldung aus: 01960501.3
(71) Anmelder: PALL CORPORATION, East Hills, New York 11548 (US); UVE Umweltmanagement & -Planung GmbH, 10777 Berlin (DE)
(72) Erfinder: Heidenreich, Steffen, 76351 Linkenheim-Hochstetten (DE); Rössler, Max-Eckhard, 74219 Möckmühl-Züttlinger (DE); Walch, Astrid, 74594 Kressberg (DE); Gutmann, Manfred, 13051 Berlin (DE); Chudzinski, Sven, 10247 Berlin (DE)
(74) Vertreter: Hoeger, Stellrecht & Partner Patentanwälte

(57) **Zusammenfassung**

Die Reduktion von Stickoxiden aus Gasen wird durch selektive Reaktion der Stickoxide mit den Reduktionsmitteln in den Feststoffkatalysatoren durchgeführt. Um hohe katalytische Aktivitäten zu erreichen, wird dies bei hohen Gastemperaturen durchgeführt. Verwendet werden in der Regel keramische Filterelemente, die mit Katalysatormaterial beschichtet sind. Dabei besteht allerdings die Gefahr, daß sich bei der Heißgasfiltration die katalytisch wirkenden Komponenten aus dem Filter ablösen. Es wird daher ein keramisches Filterelement mit Stützmaterial in Form von Partikeln, mit Bindermaterial und Katalysatormaterial vorgeschlagen, bei dem das Bindermaterial Katalysatormaterial aufweist oder das Bindermaterial teilweise durch das Katalysatormaterial ersetzt ist und wobei die Stützmaterialpartikel (1) über das Katalysator- und/oder Bindermaterial miteinander verbunden sind.

## Beschreibung

Die Erfindung betrifft ein keramisches Filterelement, insbesondere eine Filterkerze, gemäß den Oberbegriffen der Patentansprüche 1 und 15, sowie eine Filterkerze gemäß dem Oberbegriff des Patentanspruches 28. Die Erfindung bezieht sich auch auf Verfahren zur Herstellung solcher Filterelemente.

Die Reduktion von Stickoxiden aus Gasen wird durch selektive Reaktion der Stickoxide mit den Reduktionsmitteln in Feststoffkatalysatoren durchgeführt. Damit eine hinreichend große katalytische Aktivität erreicht wird und um die Salzablagerung auf der Katalysatoroberfläche auszuschließen, die zu einer Deaktivierung des Katalysators führt, sind entsprechend hohe Gastemperaturen erforderlich. Beispielsweise werden Reduktionskatalysatoren zur Rauchgasreinigung in Kraftwerken im Rauchgasstrom zwischen Kessel und Luftvorwärmer bei Temperaturen von etwa 300°C bis 350°C eingesetzt.

Das keramische Katalysatormaterial wird dabei zumeist in Form von starren Platten oder von Wabenkörpern, teilweise aber auch in Form von Schüttschichten, angeordnet.

Bei den sogenannten Low-Dust-Verfahren schaltet man den Wabenkörpern oder Plattenkatalysatoren ein Heißgaselektrofilter zur weitgehenden Abtrennung des Staubes vor. Bei den sogenannten High-Dust-Verfahren passiert das Gas ohne vorherige Entstaubung den mit einem Katalysator gefüllten Reaktor. Die einzelnen Katalysatorelemente müssen über entsprechend große freie Strömungskanäle für das Gas verfügen, um Verstopfungen zu vermeiden.

Den genannten Verfahrensvarianten ist gemeinsam, daß für die Stickoxidabscheidung zusätzlich zu den bereits bestehenden Apparaten und Einrichtungen zur Niederschlagung von anderen Schadstoffkomponenten weitere voluminöse und aufwendige Apparate hinzukommen. Eine derart aufwendige Gasreinigungstechnik wird insbesondere dann nachteilig, wenn es um die Behandlung vergleichsweise kleiner Gasströme geht.

Es wird daher in der DE 36 34 360 vorgeschlagen, daß die stickoxidhaltigen Gase mit dem Reduktionsmittel gemischt und daß die Mischung durch mindestens ein katalytisch wirkendes Filterelement geleitet wird, das aus einem keramischen Trägermaterial und den katalytisch wirksamen Substanzen besteht. Das katalytisch wirkende Filterelement wird auch zur Entstaubung der stickoxidhaltigen Gase verwendet. Das Filterelement besteht entweder aus Filzen oder Vliesen, die aus Fasern des keramischen Trägermaterials durch Verdichtung hergestellt und mit den katalytisch wirkenden Substanzen dotiert worden sind, oder aus porösen Sinterkörpern, die aus Granalien des keramischen Trägermaterials durch Sintern hergestellt und mit den katalytisch wirkenden Substanzen dotiert worden sind. Das Filterelement kann die Form einer Filterkerze aufweisen. Das Dotieren des keramischen Trägermaterials in den katalytisch wirkenden Substanzen erfolgt dadurch, daß diese Substanzen vor, während oder nach der Herstellung der Filze, Vliese oder Sinterkörper auf das keramische Trägermaterial aufgebracht werden. Dies kann beispielsweise durch Tränken der Filterelemente mit Salzlösung und anschließendes Erhitzen der mit den Salzen dotierten Filterelemente erfolgen.

Aus der DE 37 05 793 ist eine Filtervorrichtung zur Gasreinigung bekannt, die einen einzigen rohrförmigen Körper aus hitzebeständiger Schaumkeramik aufweist, der gleichzeitig als Staubfilter und mit entsprechender Beschichtung als Katalysator wirksam ist.

In der EP 0 470 659 wird ein Verfahren zur Abtrennung von Staub und organischen Verbindungen aus sauerstoffhaltigen Gasen, insbesondere aus Verbrennungsabgasen, beschrieben. Hierbei wird das zu reinigende Abgas durch mindestens ein katalytisch wirkendes Filterelement geleitet, das aus einem keramischen Trägermaterial und den katalytisch wirksamen Substanzen zusammengesetzt ist. Das Filterelement kann aus einem porösen Sinterkörper bestehen, der aus Granalien des keramischen Trägermaterials durch Sintern hergestellt und mit den katalytisch wirkenden Substanzen dotiert worden ist.

Die WO 9012950 beschreibt einen Dieselrußfilter, der aus Wabenkörpern besteht, von dem die ersten Wabenkörper mit einer ersten Oberflächenschicht versehen sind, die in ansich bekannter Weise katalytisch die Umsetzung von Stickoxiden und Kohlenmonoxid zu Stickstoff bzw. Kohlendioxid bewirken, während die zweiten Wabenkörper mit einer zweiten Oberflächenschicht versehen sind und die in ansich bekannter Weise katalytisch eine Herabsetzung der Zündtemperatur des hier anhaftenden Rußes bewirken.

Aus der WO 9803249 ist eine Gasreinigungsvorrichtung in Form einer Filterkerze bekannt. Die Filterkerze weist an der Außenseite eine Membranschicht aus ultrafeinen Siliziumkarbidteilchen auf, um Staubpartikel herauszufiltern. In Strömungsrichtung nach innen folgt eine katalytisch wirksame Schicht aus gesintertem Siliziumkarbidpulver. Als Katalysator ist eine Vanadium-Titan-Verbindung vorgesehen, mit der der Siliziumkarbidfilter imprägniert ist. Die Filterkerze wird durch eine nachträgliche Beschichtung eines porösen Elementes hergestellt, was den Nachteil hat, daß die poröse Schicht nicht durchgehend gleichmäßig im Porenraum aufgebracht werden kann und somit keine homogene Verteilung des Katalysatormaterials gegeben ist. Zusätzlich besteht das Problem der Haftung der aufgebrachten Schicht auf den Siliziumkarbidpartikeln, wobei erschwerend hinzu kommt, daß im Bereich der Heißgasfiltration Temperaturwechselbeanspruchungen auftreten, die ein Ablösen der Beschichtung unterstützen können.

Es ist daher Aufgabe der Erfindung, ein keramisches Filterelement bereitzustellen, das für die Heißgasfiltration eingesetzt werden kann, einen größeren Wirkungsgrad aufweist und bei dem nicht die Gefahr besteht, daß sich die katalytisch wirkenden Komponenten aus dem Filter ablösen.

Diese Aufgabe wird mit einem keramischen Filterelement gelöst, das gemäß einer ersten Alternative dadurch gekennzeichnet ist, daß das Bindermaterial Katalysatormaterial aufweist oder mindestens teilweise durch das Katalysatormaterial ersetzt ist und daß die Stützmaterialpartikel über das Katalysator- und/oder über das Bindermaterial miteinander verbunden sind.

Dadurch, daß die Stützmaterialpartikel über die Katalysator- und/oder Bindermaterialien miteinander verbunden sind, ist der Abstand der Stützmaterialpartikel größer als bei Filterelementen, bei denen zuerst die Stützmaterialpartikel gesintert und anschließend die Binder/Katalysatormaterialien eingebracht werden. Die Binder/Katalysatormaterialien bilden vorzugsweise stegartige Verbindungen zwischen den Stützmaterialpartikeln aus, wobei zwischen den Stegen Freiräume zum Durchtritt des zu filtrierenden Gases verbleiben. Die Durchströmung wird bei höherem Wirkungsgrad verbessert. Pro Volumeneinheit steht im Filterelement außerdem mehr Katalysatormaterial zur Verfügung, wodurch der Wirkungsgrad des Filterelements gegenüber herkömmlichen Filterelementen zusätzlich erhöht wird.

Es hat sich auch überraschend herausgestellt, daß bei dieser Struktur ein Herauslösen der katalytischen Komponenten verhindert wird.

Der Wirkungsgrad des Filterelementes wird dadurch weiter erhöht, daß das Bindermaterial entweder Katalysatormaterial aufweist oder durch Katalysatormaterial teilweise ersetzt ist.

Das Katalysatormaterial übernimmt in der erfindungsgemäßen Struktur gleichzeitig auch eine Binderfunktion für die Stützmaterialpartikel, so daß auf reines Bindermaterial teilweise oder ganz verzichtet werden kann. In dem Maße, wie das Bindermaterial reduziert wird, kann der Katalysatoranteil erhöht werden.

Vorteilhafterweise liegen die Katalysator- und Bindermaterialien als Verbundpartikel vor. Diese Verbundpartikel können aus 90 bis 99 Gew.-% Katalysatormaterial und Rest Bindermaterial bestehen.

Das Katalysatormaterial wird bereits bei der Herstellung des keramischen Filterelementes eingebunden, wodurch eine homogene Verteilung des Katalysatormaterials im Filterelement erzielt wird. Dadurch wird der Wirkungsgrad des Filterelementes gegenüber den herkömmlichen keramischen Filterelementen ebenfalls erhöht.

Vorzugsweise besteht das Katalysatormaterial aus Oxiden der seltenen Erden, aus Aluminaten, aus Silikaten, aus Titanaten oder Titandioxid oder besonders bevorzugt Kalziumaluminat. Dabei kann es sich um eine Substanz einer der genannten Stoffklassen handeln, um Gemische aus mehreren Substanzen jeweils einer der genannten Stoffklassen oder um Gemische aus Substanzen aus mehreren der genannten Stoffklassen.

Es werden vorzugsweise Aluminate, Titanate oder Titandioxide verwendet, wenn das Bindermaterial vollständig durch das Katalysatormaterial ersetzt wird. Andere Katalysatormaterialien sind ebenfalls geeignet.

Als Bindermaterial werden herkömmliche Materialien, wie z.B. Kaolin, Flußmittel oder Ton verwendet.

Hierbei kann es von Vorteil sein, dem Katalysatormaterial seinerseits einen Haftvermittler zuzugeben, der vorzugsweise aus Flußmittel besteht.

Von besonderem Vorteil hat es sich erwiesen, wenn das Katalysatormaterial mit Promotoren modifiziert ist, bzw., wenn das Katalysatormaterial aus einem Gemisch aus Substanzen der oben genannten Stoffklassen besteht, zumindest eine dieser Substanzen mit Promotoren modifiziert ist.

Als Stützmaterial für die Stützkörper werden die bekannten Materialien SiC, Mullit oder Aluminiumoxid verwendet.

Vorzugsweise beträgt der Anteil des Stützmaterials 60 bis 90 Gew.-% und der des Katalysator-/Bindermaterials 10 bis 40 Gew.-%. Vorteilhafterweise liegt der Anteil des Stützmaterials bei 65 bis 75 Gew.-% und der des Katalysatorbindermaterials bei 25 bis 35 Gew.-%. Beispielsweise kann das Stützmaterial aus SiC oder Al₂O₃ und das Katalysatorbindermaterial aus Tonerdezement (Kalziumaluminat) und Ton bestehen.

Vorzugsweise befindet sich das Katalysatormaterial nur in der zweiten Schicht des Filterelementes.

Das Verfahren zur Herstellung eines solchen Filterelementes, bei dem zuerst der Stützkörper hergestellt und danach die Schicht für die Partikelabscheidung auf den Stützkörper aufgebracht wird, ist dadurch gekennzeichnet, daß das Bindermaterial feinkörnig und homogen mit dem jeweiligen Katalysatormaterial vermischt wird, daß diese Mischung anschließend mit dem Stützmaterial vermischt wird und daß diese resultierende Mischung dann zur Herstellung des Stützkörpers in Form gebracht und gesintert wird.

Wenn das gesamte Bindermaterial durch Katalysatormaterial ersetzt wird, wird dieses Katalysatormaterial mit dem Stützmaterial vermischt und analog die Formgebung und Sinterung durchgeführt.

Eine weitere Variante des Herstellungsverfahrens sieht vor, daß aus Bindermaterial und Katalysatormaterial Verbundpartikel hergestellt werden, und diese Verbundpartikel anschließend mit dem Stützmaterial vermischt werden. Die resultierende Mischung wird zur Herstellung des Stützkörpers in Form gebracht und gesintert.

Eine weitere Alternative sieht vor, daß mindestens ein pulverförmiges Ausgangsmaterial oder mindestens ein in einer Lösung vorliegendes Ausgangsmaterial, das unter Wärmeeinwirkung Katalysator- und/oder Bindereigenschaften ausbildet, mit dem Stützmaterial vermischt wird und daß die resultierende Mischung zur Herstellung des Stützkörpers in Form gebracht und gesintert wird. Als pulverförmige Ausgangsmaterialien sind beispielsweise Kalziumoxid und Aluminiumoxid geeignet, aus denen sich Kalziumaluminat bildet.

Aus diesen Ausgangsmaterialien bilden sich erst bei der Sinterung des Filterelementes durch chemische Reaktionen das Katalysatormaterial. Diese Ausgangsstoffe können sowohl Stoffe enthalten, aus denen sich das Katalysatormaterial bildet als auch das Bindermaterial.

Aus Ausgangsmaterialien, die in Lösungen vorliegen, sind insbesondere Kalziumnitrat und Aluminiumnitrat geeignet, aus denen sich Kalziumaluminat bildet. Es können daher beispielsweise wässrige Nitratlösungen zur Herstellung der Ausgangsmaterialien verwendet werden. Die Lösungen mit den Ausgangsstoffen werden dann gemeinsam mit dem Bindermaterial den Stützkörpern beigemischt. Das Katalysatormaterial bildet sich bei der Sinterung des Formkörpers.

Beispielsweise bei Sintertemperatur zwischen 1255 und 1350°C, vorzugsweise um 1300°C, versintern die Stützmaterialpartikel nicht miteinander. Nur durch die Versinterung des Binder- und/oder Katalysatormaterials, insbesondere der Verbundpartikel, wird der Halt der Stützmaterialpartikel erzielt.

Gemäß einer zweiten Alternative wird die Aufgabe durch ein keramisches Filterelement gelöst, das dadurch gekennzeichnet ist, daß das Stützmaterial mindestens teilweise durch das Katalysatormaterial ersetzt ist.

Vorzugsweise besteht das Katalysatormaterial aus einem oder mehreren Aluminaten, aus einem oder mehreren Titanaten oder aus Titandioxid.

Gemäß einer weiteren Ausführungsform besteht das Katalysatormaterial aus einem oder mehreren Oxiden oder Mischoxiden der seltenen Erden, mit denen die Stützmaterialkörner beschichtet sind.

Es hat sich auch als vorteilhaft erwiesen, wenn das Katalysatormaterial aus einem Gemisch aus mindestens einem Oxid oder Mischoxid der seltenen Erden und mindestens einem Aluminat, einem Titanat oder Titanoxid besteht.

Das Verfahren zur Herstellung eines solchen keramischen Filterelementes gemäß der zweiten Alternative sieht drei unterschiedliche Verfahrensvarianten vor. Gemäß einer ersten Variante
a) wird für die Herstellung des Stützkörpers Stützmaterial und Katalysatormaterial gemeinsam verwendet, wobei beide Materialien feinkörnig vorliegen und gemischt werden.
   Gemäß der zweiten Variante
b) wird nur herkömmliches Stützmaterial verwendet, das feinkörnig vorliegt, wobei die Stützmaterialkörner mit einem oder mehreren Oxiden oder Mischoxiden der seltenen Erden und/oder mit einem oder mehreren Aluminaten, einem oder mehreren Titanaten oder Titandioxid beschichtet werden.
   Gemäß der dritten Variante
c) wird nur Katalysatormaterial verwendet, das ebenfalls feinkörnig vorliegt.

Zur Herstellung des Stützkörpers werden diese derart aufbereiteten Materialien anschließend gesintert.

Die Beschichtung gemäß des Verfahrensschrittes b) wird vorzugsweise mittels der Sol-Gel-Methode durchgeführt. Hierbei können die Stützmaterialkörner in einem Mischer mit dem Sol besprüht werden. Der Vorteil dieser Methode besteht darin, daß die ausgezeichnete Thermoschockbeständigkeit von Siliziumkarbid, das für das Stützmaterial vorzugsweise verwendet wird, genutzt wird und eine kostengünstige gleichmäßige Beschichtung des Ausgangskorns vor dem Brand des Filterelementes mit Katalysator erfolgt. Ebenso ist es von Vorteil, bei Wahl des Verfahrensschrittes b) die Beschichtung mittels Aufsprühen eines keramischen Schlickers durchzuführen. Dies geschieht vorzugsweise dadurch, daß in einem Mischer die Stützmaterialkörner mit dem keramischen Schlicker besprüht werden.

Im Verfahrensschritt c) werden vorzugsweise zwei Kornfraktionen verwendet die miteinander gemischt werden, wobei eine Feinkornsinterung bei reduzierter Brenntemperatur durchgeführt wird. Die Bindung des direkt aus Katalysatormaterial aufgebauten Trägerkörpers erfolgt somit über eine Eigenbindung, um eine Benetzung der katalytisch aktiven Oberfläche durch einen zusätzlichen Binder zu vermeiden. Zur Reduzierung der Brenntemperatur wird daher die Feinkornsinterung als Bindung gewählt, die durch Einmischen einer Feinfraktion des gleichen Materials erzielt wird.

In den Verfahrensschritten a) oder b) können zusätzlich die Stützmaterialkörner mit katalytisch aktiven Edel- oder Nichtedelmetallen dotiert werden. Vorzugsweise geschieht dies nach dem Sintern. Nach dem Sintern können auch die Katalysatormaterialkörner mit katalytisch aktiven Edel- oder Nichtedelmetallen dotiert werden (Verfahrensschritte a), b), c)). Als Materialien für die Dotierung kommen insbesondere Platin, Palladium, Rhodium, Gold, Silber, Nickel, Kupfer, Mangan oder Kobalt in Frage. Die Dotierung dient der gezielten zusätzlichen Erhöhung der katalytischen Aktivität und Selektivität für spezielle chemische Reaktionen.

Die Modifizierung des Katalysatormaterials kann durch naßchemische Dotierungsverfahren oder Gasphasenbeschichtungsverfahren erfolgen.

Gemäß einer dritten Alternative wird die Aufgabe durch eine Filterkerze gemäß Anspruch 22 gelöst.

Herstellen läßt sich eine erfindungsgemäße Filterkerze dadurch, daß der zylindrische, einseitig geschlossene Formkörper einer herkömmlichen Filterkerze mit einer Schüttung aus Katalysatormaterial gefüllt wird und die offene Seite des Formkörpers verschlossen wird, damit die Katalysatorschüttung nicht ausgetragen wird. Als vorteilhaft hat sich dabei herausgestellt, wenn der Verschluß als keramische, poröse Schicht ausgebildet ist.

Als Katalysatormaterial kommen Oxide oder Mischoxide der seltenen Erden, Aluminate, Silikate, Titanate und Titandioxid in Frage. Dabei kann das Katalysatormaterial aus einer einzigen Substanz, aus mehreren Substanzen einer der oben genannten Stoffklassen oder aus einem Gemisch aus Substanzen unterschiedlicher oben genannter Stoffklassen bestehen. Besonders bevorzugt ist dabei die Verwendung von Kalziumaluminat.

Es hat sich als vorteilhaft herausgestellt, wenn das Katalysatormaterial mit Promotoren modifiziert ist. Insbesondere wird eine hohe Wirkung der erfindungsgemäßen Filterkerze erreicht, wenn das Katalysatormaterial mit katalytisch aktiven Edel- oder Nichtedelmetallen dotiert ist. Als Dotierungsmaterialien werden Platin, Palladium, Rhodium, Gold, Silber, Nickel, Kupfer, Mangan oder Kobalt bevorzugt.

Der Vorteil der Erfindung besteht darin, daß katalytisch aktive keramische Filterelemente erhalten werden, die hochtemperaturbeständig, dampffest und gegenüber Heteroelementverbindungen resistent sind. Daher können sie unmittelbar im heißen Rauch oder Abgasstrom angeordnet werden und gleichzeitig die Heißgasentstaubung sowie die totale Umwandlung von organischen Schadstoff- und Restkomponenten gewährleisten. Neben dem Gasreinigungseffekt wird damit auch dem Bilden von Dioxinen (DeNovo Synthese) die stoffliche Grundlage genommen.

Die katalytische Ausgestaltung der Filterelemente kann die bifunktionelle Wirkung des Katalysatorsystems, d.h. die Totaloxidation bzw. die thermischkatalytische Spaltung, und damit folgende Reaktionen beinhalten, die vom jeweiligen verwendeten Katalysatormaterial bzw. ggf. verwendeten Dotierungsmaterial abhängen.

Katalytische Reduzierung von Stickoxiden, katalytisches Cracken von langkettigen Kohlenwasserstoffen, katalytischer Abbau von leicht verdampfbaren organischen Verbindungen, Totaloxidation von Kohlenstoff und Kohlenstoffverbindungen usw.. Die katalytische Wirkung der Filterelemente ist jedoch auf diese Anwendungsbereiche nicht beschränkt.

Die typischen Wandstärken des inneren Stützkörpers der Filterkerze liegen zwischen 10 und 15 mm. Die Einsatztemperatur der erfindungsgemäßen Filterkerzen reichen bis zu 1000°C.

Für die erste Schicht, die für die Partikelabscheidung dient und auch als Membranschicht bezeichnet wird, wobei diese Membranschicht katalytisch nicht aktiv ist, wird als Standardmaterial Mullitkorn verwendet, wobei aber auch andere Materialien zum Einsatz kommen können. Generell sind alle keramischen Oxide, Nitride und Karbide geeignet.

Die Membranschicht kann eine aus mehreren Schichten aufgebaute asymmetrische Membranschicht sein. Die Membranschichtdicke kann bis zu 200 µm betragen, wobei die Porengröße bei 0,05 bis 40 µm liegt. Die Membranschicht wird aus gebundenem Inertkorn oder aus über Polymer-Sol-Gel-Methoden hergestellte Feinpartikel hergestellt. Als Beschichtungsmethoden kommen Besprühen, Elektrophorese, Folienguß, Schlickerguß oder die Sol-Gel-Methode in Frage.

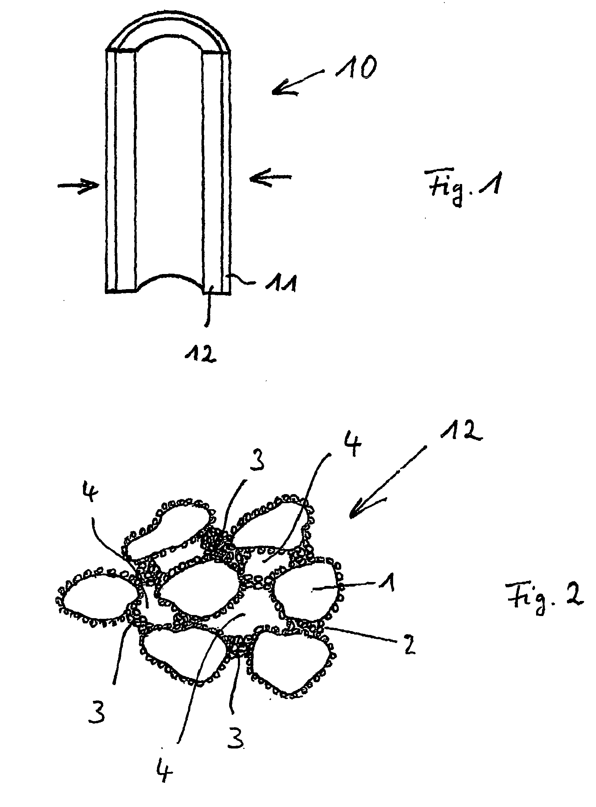

In der Fig. 1 ist eine Filterkerze 10 im Vertikalschnitt dargestellt. Die Filterkerze 10 besitzt eine erste außenliegende Schicht 11 für die Partikelabscheidung und eine zweite innenliegende, den Stützkörper bildende Schicht 12. Die Strömungsrichtung ist mit Pfeilen gekennzeichnet.

In der Fig. 2 ist ein vergrößerter Ausschnitt aus der zweiten Schicht 12 dargestellt. Die Stützmaterialpartikel 1 weisen eine unregelmäßige Form auf und sind beabstandet zueinander angeordnet. Diese Partikel 1 sind über die aus Katalysator- und Bindermaterial bestehenden Partikel 2 miteinander verbunden, die stegartige Brücken 3 bilden. Zwischen den stegartigen Brücken 3 verbleiben Freiräume 4 für den Durchtritt des zu filtrierenden Gases, wobei die Freiräume zur Verdeutlichung größer dargestellt sind. Die hier schematisch dargestellten Partikel 2 sind Verbundpartikel aus Katalysator- und Bindermaterial.

## Patentansprüche

1. Filterkerze für die Heißgasfiltration, die einen zylindrischen, einseitig geschlossenen Formkörper aufweist, **dadurch gekennzeichnet, daß** der Innenraum des Formköpers mit einer Schüttung aus Katalysatormaterial gefüllt ist und an der offenen Seite des Formkörpers ein Verschluß angeordnet ist.

2. Filterkerze nach Anspruch 1, **dadurch gekennzeichnet, daß** der Verschluß als keramische, poröse Schicht ausgebildet ist.

3. Filterkerze nach Anspruch 1 oder 2, **dadurch gekennzeichnet, daß** das Katalysatormaterial aus einem oder mehreren Oxiden oder Mischoxiden der seltenen Erden und/oder aus einem oder mehreren Aluminaten und/oder aus einem mehr Silikaten und/oder aus einem oder mehreren Titanaten oder Titandioxid besteht.

4. Filterkerze nach Anspruch 3, **dadurch gekennzeichnet, daß** das Katalysatormaterial aus mindestens Kalziumaluminat besteht.

5. Filterkerze nach einem der Ansprüche 1 bis 4, **dadurch gekennzeichnet, daß** das Katalysatormaterial mit Promotoren modifiziert ist.

6. Filterkerze nach Anspruch 5, **dadurch gekennzeichnet, daß** das Katalysatormaterial mit katalytisch aktiven Edel- oder Nichtedelmetallen dotiert ist.

7. Filterkerze nach Anspruch 6, **dadurch gekennzeichnet, daß** das Katalysatormaterial mit Platin, Palladium, Rhodium, Gold, Silber, Nickel, Kupfer, Mangan oder Kobalt dotiert ist.
